# EUROPEAN PATENT APPLICATION

(11) **EP 2 750 445 A1**
(43) Date of publication of application: **02.07.2014**
(21) Application number: 12853537.4
(22) Date of filing: 13.09.2012
(51) Int. Cl.: H04W 36/22, H04W 36/30, H04W 36/38

(54) **BASE STATION, COMMUNICATION SYSTEM, AND CONTROL METHOD AND CONTROL PROGRAM FOR BASE STATION**

(30) Priority: 02.12.2011 JP 2011264712
(71) Applicant: NEC Corporation, Tokyo 108-8001 (JP)
(72) Inventor: ASADA, Shiro, Tokyo 108-8001 (JP)
(74) Representative: MacDougall, Alan John Shaw
(86) International application number: PCT/JP2012/005809
(87) International publication number: WO 2013/080409

(57) **Abstract**

In order to prevent disconnection of mobile stations from the handover-destination base station and to share the load between base stations, a first base station (e.g., 10_1) forming a communication system (1) receives, from each of one or more mobile stations (30_1-30_n) camping on the first base station (10_1), downlink radio quality from a second base station (10_2) to each of the mobile stations (30_1-30_n). The second base station (10_2) is installed adjacent to the first base station (10_1). The first base station (10_1) selects, when a load on the first base station (10_1) exceeds a predetermined threshold, a mobile station corresponding to the highest radio quality among the received radio quality. The first base station (10_1) instructs the selected mobile station to perform a handover to the second base station (10_2).

## Description

### Technical Field

The present invention relates to a base station, a communication system, and a method and program for controlling a base station. In particular, the invention relates a technique to perform a handover at the initiative of a base station to share the load between base stations.

### Background Art

The number of users of mobile phones in Japan has exceeded one hundred millions. Further, the number of users of smart phones, which are multifunctional mobile phones, has been increased in recent years. The load on each base station has been significantly increased accordingly. Due to the introduction of smart phones, users have had more opportunities to acquire information or view moving pictures through the Internet. Therefore, it is required that such information or moving pictures can be downloaded at high speed.

Technologies for conducting radio communication at high speed include MIMO (Multiple Input Multiple Output) technology. The MIMO technology has been a research trend over the past several years and can expand the coverage or improve the transmission speed.

The MIMO technology can be expected to increase the throughput per mobile station. However, when the number of mobile stations which are camping on a base station is increased, the average throughput of all the mobile stations is reduced. Another problem is that if the number of mobile stations camping on one base station is increased and reaches the maximum number of connectable mobile terminals, a new mobile station cannot connect to the base station.

In a typical radio communication system, each mobile station usually selects a base station through which radio quality is better. Therefore, even when multiple base stations exist around each mobile station, there frequently occurs a phenomenon where mobile stations unevenly camp on one base station due to variations in the radio environment, such as radio interference or fading. When many mobile stations are camping only on a single base station, there occur problems such as prevention of a new mobile station from connecting to the base station or a reduction in the transmission speed.

For example, Patent Literature 1 discloses a technique for addressing these problems. A base station disclosed in Patent Literature 1 estimates the load on each of multiple neighboring base stations from RTT (Round Trip Time) of round trip communication with each neighboring base station, and hands over a mobile station to a neighboring base station having the lowest load to share the load between the base stations.

### Citation List

### Patent Literature

**Patent Literature 1:** Japanese Unexamined Patent Application Publication No. 2011-010254
**Patent Literature 2:** Japanese Unexamined Patent Application Publication No. 2007-318335

### Summary of Invention

### Technical Problem

However, the inventors of this application have found that the above Patent Literature 1 may cause disconnection of the mobile station from the handover-destination base station. This is because the technique disclosed in Patent Literature 1 does not at all ensure the radio quality of the mobile station under the handover-destination base station.

As a reference technique, Patent Literature 2 discloses a base station which when the strength of an uplink signal from a mobile station is deteriorated, acquires, from multiple neighboring base stations, the strength of an uplink signal from a mobile station to each neighboring base station, and determines, as the handover destination of the mobile station, a neighboring base station showing the highest signal strength. However, even when the technique disclosed in Patent Literature 2 is applied, there remains the possibility that the mobile station may be disconnected from the handover-destination base station. This is because uplink radio quality characteristics and downlink radio quality characteristics are asymmetry to each other, and thus high strength of the uplink signal does not necessarily ensure downlink radio quality. Upon synchronization with the destination base station, the mobile station needs to receive various types of radio signals transmitted in the downlink direction. If the downlink radio quality is poor, the mobile station has difficulty in receiving these radio signals accurately. Further, since Patent Literature 2 does not at all consider load sharing, mobile stations are uniformly handed over to a single base station. Thus, the destination base station may become congested.

Accordingly, an exemplary object of the present invention is to prevent disconnection of mobile stations from the handover-destination base station and to share the load between base stations.

### Solution to Problem

In order to achieve the above-mentioned object, a base station according to a first exemplary aspect of the present invention includes: first communication means for conducting radio communication with one or more mobile stations camping on the base station; and control means for controlling the first communication means. The first communication means is configured to receive, from each of the mobile stations, downlink radio quality from a neighboring base station to each of the mobile stations, the neighboring base station being installed adjacent to the base station. The control means is configured to: select, when a load on the base station exceeds a predetermined threshold, a mobile station corresponding to the highest radio quality among the received radio quality; and cause the first communication means to instruct the selected mobile station to perform a handover to the neighboring base station.

Further, a communication system according to a second exemplary aspect of the present invention includes first and second base stations installed adjacent to each other. The first base station is configured to: receive, from each of one or more mobile stations camping on the first base station, downlink radio quality from the second base station to each of the mobile stations; select, when a load on the first base station exceeds a predetermined threshold, a mobile station corresponding to the highest radio quality among the received radio quality; and instruct the selected mobile station to perform a handover to the second base station.

Further, a control method according to a third exemplary aspect of the present invention provides a method of controlling a base station. This method includes: receiving, from each of one or more mobile stations camping on the base station, downlink radio quality from a neighboring base station to each of the mobile stations, the neighboring base station being installed adjacent to the base station; selecting, when a load on the base station exceeds a predetermined threshold, a mobile station corresponding to the highest radio quality among the received radio quality; and instructing the selected mobile station to perform a handover to the neighboring base station.

Furthermore, a control program according to a fourth exemplary aspect of the present invention causes a base station to execute: a process to receive, from each of one or more mobile stations camping on the base station, downlink radio quality from a neighboring base station to each of the mobile stations, the neighboring base station being installed adjacent to the base station; a process to select, when a load on the base station exceeds a predetermined threshold, a mobile station corresponding to the highest radio quality among the received radio quality; and a process to instruct the selected mobile station to perform a handover to the neighboring base station.

### Advantageous Effects of Invention

According to the present invention, it is possible to prevent disconnection of mobile station from the handover-destination base station and to share the load between base stations.

### Brief Description of Drawings

Fig. 1 is a block diagram showing a configuration example of a communication system to which a base station according to a first exemplary embodiment of the present invention is applied;
Fig. 2 is a block diagram showing a configuration example of the base station according to the first exemplary embodiment of the present invention;
Fig. 3 is a flowchart showing an operation example of the base station according to the first exemplary embodiment of the present invention;
Fig. 4 is a block diagram showing a configuration example of a list used for the base station according to the first exemplary embodiment of the present invention;
Fig. 5 is a block diagram showing a configuration example of a base station according to a second exemplary embodiment of the present invention; and
Fig. 6 is a flowchart showing an operation example of the base station according to the second exemplary embodiment of the present invention.

### Description of Embodiments

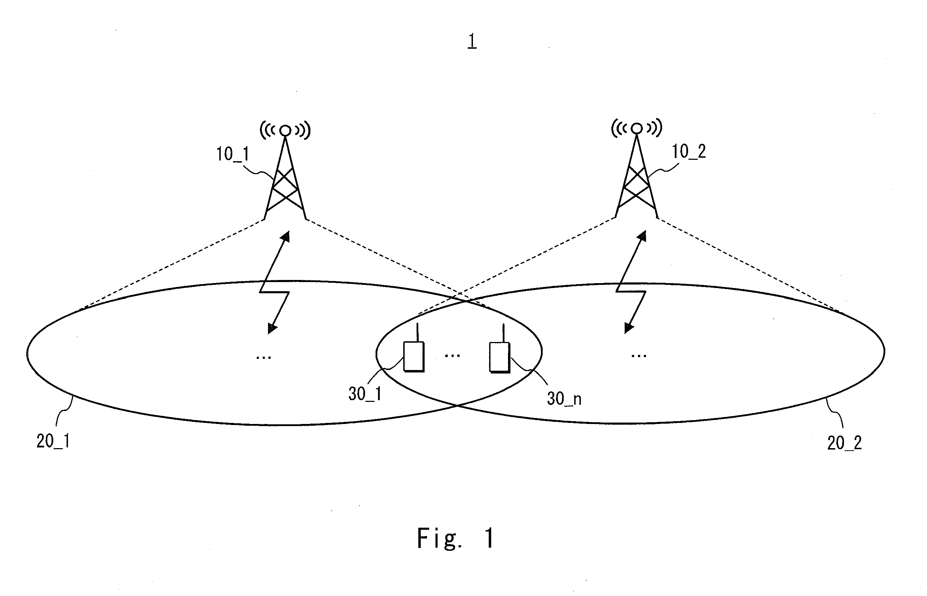

Hereafter, referring to Figs. 1 to 6, there will be described first and second exemplary embodiments of a base station according to the present invention and a communication system to which this base station is applied. Note that in the drawings, the same components are given the same reference signs, and repeated description thereof will be omitted as necessary to clarify the description.

### <First Exemplary Embodiment>

As shown in Fig. 1, a communication system 1 according to this exemplary embodiment includes two units of base stations 10_1 and 10_2 (hereafter may be collectively referred to as reference sign 10) installed adjacent to each other. The base stations 10_1 and 10_2 form cells 20_1 and 20_2, respectively, such that the base stations 10_1 and 10_2 can conduct radio communication with one or more mobile stations 30_1 to 30_n (hereafter may be collectively referred to as reference sign 30).

Note that the base stations 10_1 and 10_2 may be macro base stations or femto base stations. A macro base station refers to a radio base station installed outdoors by a telecommunications carrier or the like, whereas a femto base station refers to a small radio base station which can be installed indoors. The femto base station is connected to a mobile communication network through a communication line, such as ADSL (Asymmetric Digital Subscriber Line), FHHT (Fiber To The Home) or the like. A cell formed by the femto base station is often called a femto cell, since the coverage thereof is extremely small compared to that of a cell formed by the macro base station (usually called a macro cell). The cells 20_1 and 20_2 may each be a sector cell (which is composed of multiple cells having different directivities) or an omni cell (a single cell where radio waves are transmitted in all directions).

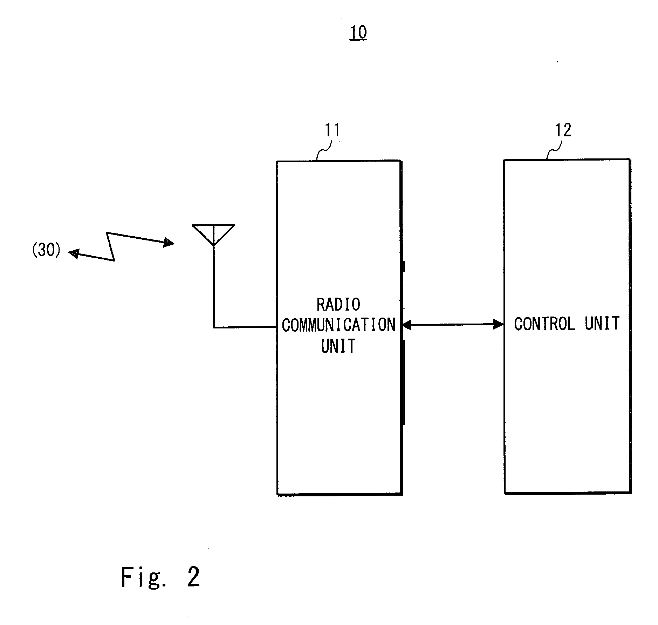

Fig. 2 shows a configuration example of the base station 10. As shown in Fig. 2, the base station 10 according to this exemplary embodiment includes a radio communication unit 11 and a control unit 12 for controlling the radio communication unit 11.

Among them, the radio communication unit 11 forms a cell according to any radio communication method employed by the communication system 1 as with a transceiver installed in a typical radio base station, thereby conducting radio communication with mobile stations.

The radio communication unit 11 broadcasts, to downlink radio transmission paths, broadcast information such as the transmission power or the MCS (Modulation and Coding Scheme) of the base station 10, and information such as the transmission power or ID (Identifier) of a neighboring base station. Moreover, the radio communication unit 11 unicasts various types of control information and user data to each of mobile stations camping on the base station 10. The control information is transmitted through C-Plane, whereas the user data is transmitted through U-Plane.

The radio communication unit 11 also periodically receives, from each mobile station camping on the base station 10, the radio quality of a downlink signal from the neighboring base station measured by each mobile station, through uplink radio transmission paths. The radio quality may be a CINR (Carrier to Interference-plus-Noise Ratio). In addition to the CINR, an RSSI (Received Signal Strength Indicator) may be used.

Specifically, taking as an example a case of employing WiMAX (Worldwide Interoperability for Microwave Access) as the radio communication method, the mobile station only has to transmit information about the measured radio quality to the base station 10 through CQICH (Channel Quality Indicator Channel). Typically, the CQICH is used to report downlink radio quality related to a base station on which the mobile station camps and from which the mobile station receives service (hereafter, this base station will be referred to as Serving Base Station). Meanwhile, in this exemplary embodiment, the CQICH is used to report both downlink radio quality related to the serving base station and downlink radio quality related to the neighboring base station.

On the other hand, the control unit 12 monitors the load on the base station 10. Specifically, the control unit 12 measures the load on the base station 10 by using as an index at least one of the following: an increase in the number of mobile stations camping on the base station 10, a reduction in radio resources allocatable to mobile stations, the utilization rate of CPU (Central Processing Unit), the utilization rate of memory, as well as the number of established RRC (Radio Resource Control) connections, a downlink radio throughput, an uplink radio throughput, the average number of active UEs (User Equipments), and the largest number of active UEs, as defined by PM counter. Then, by comparing the measured load with a predetermined threshold, the control unit 12 determines whether the base station 10 is placed in a high-load state. If the measured load exceeds the threshold, the control unit 12 determines that the base station 10 is placed in the high-load state. In contrast, if the measured load falls below the threshold, the control unit 12 determines that the base station 10 is not placed in the high-load state.

Further, when the control unit 12 determines that the base station 10 is placed in the high-load state, the control unit 12 selects a mobile station to be handed over to the neighboring base station from among the mobile stations camping on the base station 10, as will be described later, based on the downlink radio quality related to the neighboring base station received at the radio communication unit 11. Then, the control unit 12 transmits a handover command to the selected mobile station through the radio communication unit 11, thereby performing a handover at the initiative of the base station.

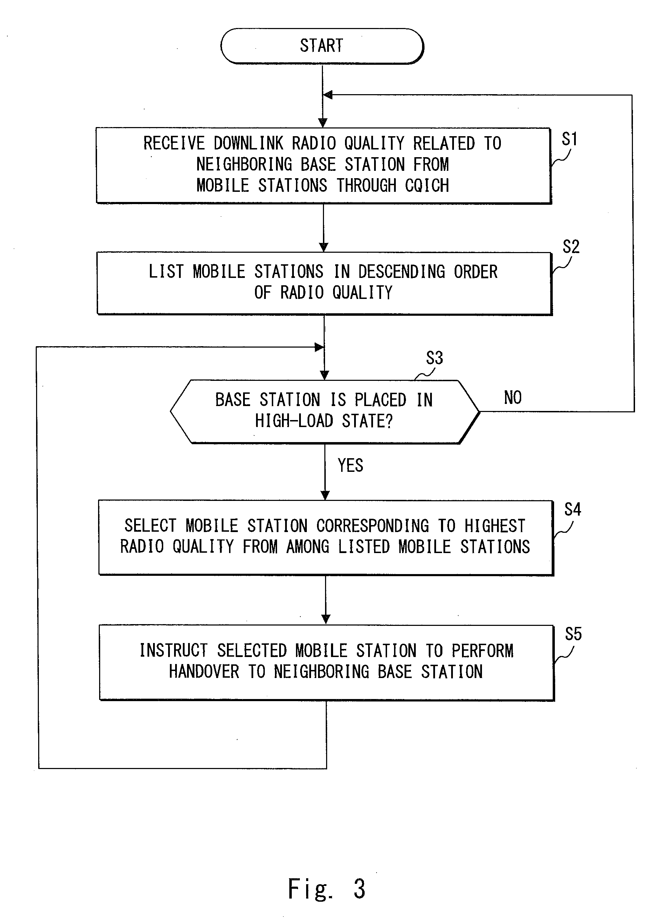

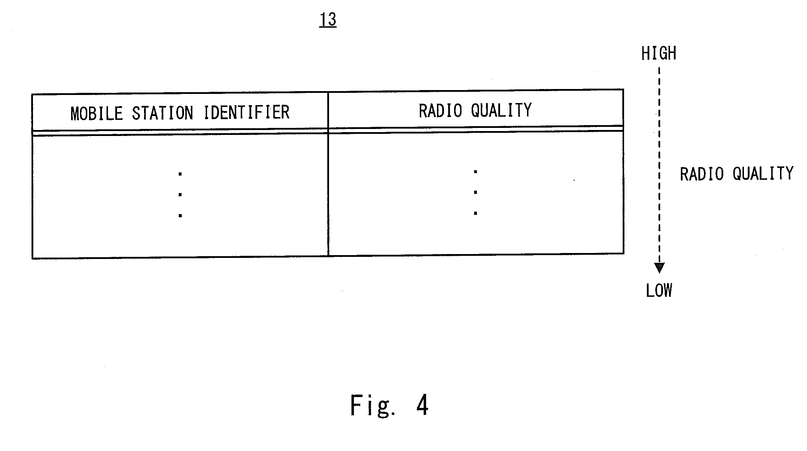

Next, a specific operation of this exemplary embodiment will be described in detail with reference to Figs. 3 and 4, taking as an example a case where the mobile stations 30_1 to 30_n shown in Fig. 1 are camping on the base station 10_1.

If each of the mobile stations 30_1 to 30_n is located on the boundary (overlap area) between the cells 20_1 and 20_2 and thus can receive a radio signal from the neighboring base station 10_2, each of the mobile stations 30_1 to 30_n transmit the radio quality thereof (CINR and RSSI) to the serving base station 10_1 through the CQICH.

As shown in Fig. 3, the radio communication unit 11 of the base station 10_1 receives downlink radio quality related to the neighboring base station 10_2, from each of the mobile stations 30_1 to 30_n through the CQICH and transfers the received downlink radio quality to the control unit 12 (step S1).

The control unit 12 lists the mobile stations 30_1 to 30_n in the descending order of the radio quality (step S2). Specifically, the control unit 12 stores, in a list 13 shown in Fig. 4, identifiers (IDs, media access control (MAC) addresses, or the like) of the mobile stations 30_1 to 30_n in association with the radio quality received from the mobile stations 30_1 to 30_n. Moreover, the control unit 12 sorts records in the list 13 in the descending order of the radio quality.

Then, the control unit 12 determines whether the base station 10_1 is placed in the high-load state, as described above (step S3). If the control unit 12 determines that the base station 10 is not placed in the high-load state, the base station 10_1 returns to step S1 and waits for reports about radio quality from the mobile stations 30_1 to 30_n.

In contrast, if the control unit 12 determines in above step S3 that the base station 10 is placed in the high-load state, the control unit 12 selects a mobile station corresponding to the highest radio quality, which is stored in the highest position in the list 13 (step S4).

Assuming that the mobile station 30_1 is selected, the control unit 12 controls the radio communication unit 11 to transmit a handover command to the mobile station 30_1 (step S5).

Thus, the mobile station 30_1 performs a handover to the neighboring base station, 10_2, so that the load on the base station 10_1 is reduced. Moreover, when the mobile station 30_1 comes under the destination base station 10_2, the radio quality thereof is ensured. Therefore, the mobile station 30_1 is reliably connected to the destination base station 10_2.

As described above, according to this exemplary embodiment, it is possible to prevent disconnection of the mobile station from the handover-destination base station and to share the load between the base stations.

After that, the control unit 12 of the base station 10_1 returns to the above step S3 and again determines whether the base station 10_1 is placed in the high-load state. As a result, if the base station 10_1 is placed in the high-load state, the control unit 12 performs the above steps S4 and S5 again and thus hands over a mobile station corresponding to the second highest radio quality, which is stored in the second highest position in the list 13, to the neighboring base station 10_2. The control unit 12 repeatedly performs this series of steps until the high-load state of the base station 10_1 is eliminated.

Thus, the load on the base station 10_1 is sufficiently reduced. Further, since mobile stations are handed over to the base station 10_2 in the descending order of the radio quality, it is possible to sufficiently prevent disconnection of the mobile stations from the neighboring base station 10_2.

Note that in this exemplary embodiment, the downlink radio quality related to the neighboring base station is transmitted through the CQICH. Therefore, the serving base station only has to allocate uplink frequencies to the mobile stations. Accordingly, the load is not increased upon transmitting the radio quality. These effects will be appreciated more clearly compared to a case of transmitting the radio quality using an L3 message (case of performing so-called hand-shake transmission). In the case of using the L3 message, a serving base station receives the L3 message as a trigger and then instructs a mobile station to report the radio quality. In response to this instruction, the mobile station transmits the radio quality to the serving base station. However, if the serving base station performs this series of steps on all mobile stations camping thereon, the number of call processing messages is increased accordingly. Thus, the load on the serving base station is increased.

If the WiMAX is used as the radio communication method, a REP-REQ/RSP (Report-Request/Response) messages may be used to transmit the radio quality as substitute for the CQICH.

If LTE (Long Term Evolution) or WCDMA (Wide-band Code Division Multiple Access) is used as the radio communication method, CQI (Channel Quality Indication) can be used as a substitute for the CQICH. Alternatively, as a substitute for the CQI, a measurement report message may be used to transmit the radio quality.

### <Second Exemplary Embodiment>

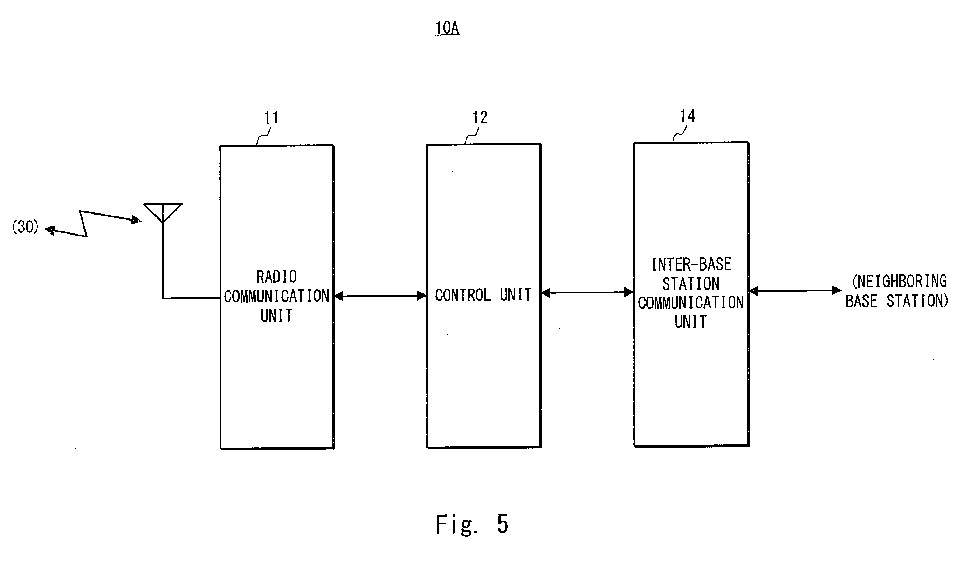

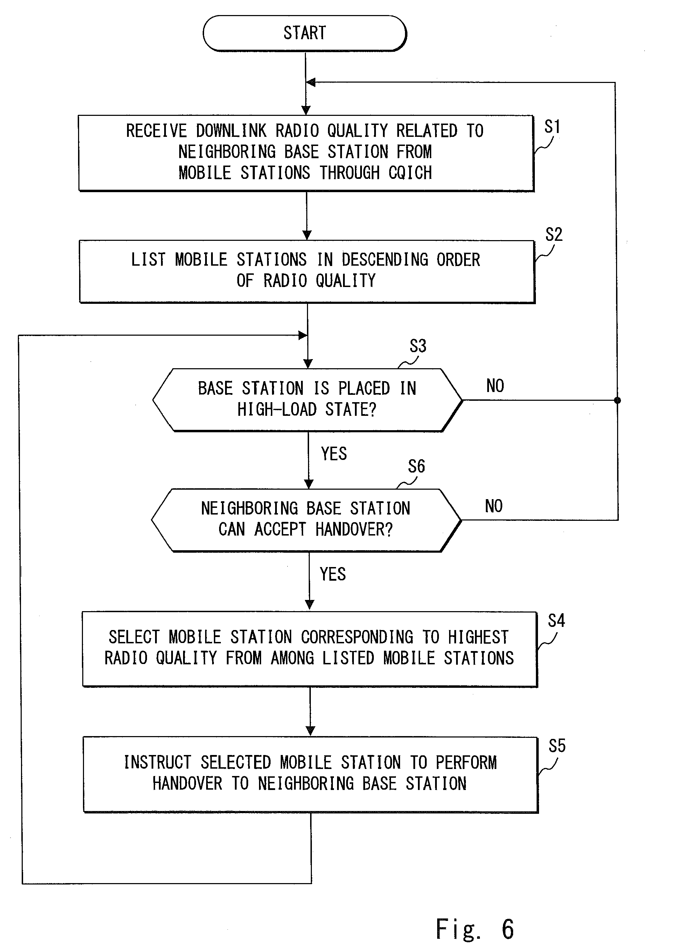

A communication system according to this exemplary embodiment can be configured as in Fig. 1. Meanwhile, a base station according to this exemplary embodiment differs from that according to the above-mentioned first exemplary embodiment in that it is configured as shown in Fig. 5 and operates as shown in Fig. 6.

Specifically, as shown in Fig. 5, a base station 10A according to this exemplary embodiment includes an inter-base station communication unit 14 controlled by the control unit 12, in addition to the elements shown in Fig. 2. The inter-base station communication unit 14 conducts communication with neighboring base stations. This communication is conducted, for example, through an X2 link which is a logic interface between base stations.

In the operations, as shown in Fig. 6, the base station 10A performs a process shown at step S6 in addition to steps S1 to S4 shown in Fig. 3. If the control unit 12 of the base station 10A determines at step S3 that the base station 10A is placed in the high-load state, the control unit 12 further determines whether the neighboring base station can accept the handover (step S6).

More specifically, the control unit 12 inquires of the neighboring base station about whether the neighboring base station can accept the handover, through the inter-base station communication unit 14. As a result, if the control unit 12 determines that the neighboring base station can accept the handover, the control unit 12 proceeds to the above step S4 to select a mobile station, thereby performing the handover in order to share the load. In contrast, if the neighboring base station cannot accept the handover, the base station 10A returns to the above step S1 and waits for reports about the radio quality from mobile stations.

As described above, in this exemplary embodiment, the serving base station preliminarily checks whether the destination base station can accept the mobile station. Thus, if the destination base station is placed in a high-load state, it is possible to avoid the handover to share the load and thus to prevent disconnection of the mobile station from the handover-destination base station before the disconnection happens.

Note that the present invention is not limited to the above exemplary embodiments, and it will be apparent for those skilled in the art that various changes can be made to the embodiments on the basis of the claims.

For example, there may be provided a program for causing a computer to execute the processes in the base station shown in the above exemplary embodiments. In this case, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (Programmable ROM), EPROM (Erasable PROM), flash ROM, RAM (Random Access Memory), etc.). The control program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

This application is based upon and claims the benefit of priority from Japanese patent application No. 2011-264712, filed on December 2, 2011, the disclosure of which is incorporated herein in its entirety by reference.

### Industrial Applicability

The present invention is applied to a base station, a communication system, and a method and program for controlling a base station. In particular, the present invention is applied for the purpose of performing a handover at the initiative of a base station to share the load between base stations.

### Reference Signs List

- 1: COMMUNICATION SYSTEM
- 10, 10_1, 10_2, 10A: BASE STATION
- 11: RADIO COMMUNICATION UNIT
- 12: CONTROL UNIT
- 13: LIST
- 14: INTER-BASE STATION COMMUNICATION UNIT
- 20_1, 20_2: CELL
- 30, 30_1-30_n: MOBILE STATION

## Claims

1. A base station comprising:
first communication means for conducting radio communication with one or more mobile stations camping on the base station; and
control means for controlling the first communication means,
wherein the first communication means is configured to receive, from each of the mobile stations, downlink radio quality from a neighboring base station to each of the mobile stations, the neighboring base station being installed adjacent to the base station,
wherein the control means is configured to:
select, when a load on the base station exceeds a predetermined threshold, a mobile station corresponding to the highest radio quality among the received radio quality; and
cause the first communication means to instruct the selected mobile station to perform a handover to the neighboring base station.

2. The base station according to Claim 1, further comprising:
second communication means for communicating with the neighboring base station,
wherein the control means is configured to:
control the second communication means to inquire of the neighboring base station about whether the neighboring base station can accept the handover; and
make the selection if the neighboring base station can accept the handover.

3. The base station according to Claim 1 or 2,
wherein the control means is configured to:
store the received radio quality; and
repeatedly select a mobile station in the descending order of the stored radio quality until the load falls below the threshold.

4. A communication system comprising:
first and second base stations installed adjacent to each other,
wherein the first base station is configured to:
receive, from each of one or more mobile stations camping on the first base station, downlink radio quality from the second base station to each of the mobile stations;
select, when a load on the first base station exceeds a predetermined threshold, a mobile station corresponding to the highest radio quality among the received radio quality; and
instruct the selected mobile station to perform a handover to the second base station.

5. The communication system according to Claim 4,
wherein the first base station is configured to:
inquire of the second base station about whether the second base station can accept the handover; and
make the selection if the second can accept the handover.

6. The communication system according to Claim 4 or 5,
wherein the first base station is configured to:
store the received radio quality; and
repeatedly select a mobile station in the descending order of the stored radio quality until the load falls below the threshold.

7. A method of controlling a base station, the method comprising:
receiving, from each of one or more mobile stations camping on the base station, downlink radio quality from a neighboring base station to each of the mobile stations, the neighboring base station being installed adjacent to the base station;
selecting, when a load on the base station exceeds a predetermined threshold, a mobile station corresponding to the highest radio quality among the received radio quality; and
instructing the selected mobile station to perform a handover to the neighboring base station.

8. The method according to Claim 7, further comprising:
inquiring of the neighboring base station about whether the neighboring base station can accept the handover; and
making the selection if the neighboring base station can accept the handover.

9. The method according to Claim 7 or 8, further comprising:
storing the received radio quality; and
repeatedly selecting a mobile station in the descending order of the stored radio quality until the load falls below the threshold.

10. A non-transitory computer readable medium that stores a control program for causing a base station to execute:
a process to receive, from each of one or more mobile stations camping on the base station, downlink radio quality from a neighboring base station to each of the mobile stations, the neighboring base station being installed adjacent to the base station;
a process to select, when a load on the base station exceeds a predetermined threshold, a mobile station corresponding to the highest radio quality among the received radio quality; and
a process to instruct the selected mobile station to perform a handover to the neighboring base station.
